# EUROPÄISCHE PATENTSCHRIFT

(11) **EP 2 094 540 B1**
(45) Veröffentlichungstag und Bekanntmachung des Hinweises auf die Patenterteilung: **11.04.2012**
(21) Anmeldenummer: 07822567.9
(22) Anmeldetag: 14.11.2007
(51) Int. Cl.: B60R 25/02

(54) **VORRICHTUNG ZUR ANSTEUERUNG EINES SPERRGLIEDES**
APPARATUS FOR ACTUATING A LOCKING ELEMENT
DISPOSITIF DE COMMANDE D'UN ORGANE DE VERROUILLAGE

(30) Priorität: 15.11.2006 DE 102006054118
(43) Veröffentlichungstag der Anmeldung: 02.09.2009
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Vogel, Andreas
(86) Internationale Anmeldenummer: PCT/EP2007/062302
(87) Internationale Veröffentlichungsnummer: WO 2008/058976

(56) Entgegenhaltungen:
- EP-A- 1 249 375
- DE-A1- 10 017 032
- DE-A1-102004 053 438
- DE-C1- 19 650 751
- GB-A- 2 401 594

## Beschreibung

Die Erfindung betrifft eine Vorrichtung zur Ansteuerung eines Sperrgliedes eines funktionswesentlichen Bauteils, insbesondere einer Lenksäule oder eines Gangschalthebels eines Kraftfahrzeuges, mit einem Getriebe, das ein Antriebsrad mit einer ersten, ortsfesten Drehachse aufweist und mit dem Sperrglied in mechanischer Wirkverbindung steht, wodurch bei Drehung des Antriebsrades das Sperrglied in eine Verriegelungsstellung und in eine Entriegelungsstellung bringbar ist, wobei die Bewegung des Sperrgliedes durch eine Drehung des Antriebsrades ausschließlich in eine Richtung durchführbar ist.

Für den Fachmann ist die genannte Vorrichtung, insbesondere für eine Lenkungsverriegelung für ein Kraftfahrzeug bekannt, bei der ein Sperrglied mittels eines Motors und eines zwischengeschalteten Getriebes zwischen einer Entriegelungsstellung und einer Verriegelungsstellung vor und zurück betätigbar ist.

Aus der DE 196 21 326 C1 ist eine derartige Vorrichtung zur Ver- und Entriegelung der Lenksäule eines Kraftfahrzeuges beschrieben. Dabei werden zwei an einer Antriebswelle befestigte Sperrglieder durch entsprechende Aktivierung eines Motors in die Nuten eines an der Lenksäule befestigten Schließringes hinein- bzw. im Falle der Entriegelung aus den Nuten herausgeschwenkt. Nachteilig bei dieser Vorrichtung ist, dass der Motor, je nach Vorgang, eine unterschiedliche Drehrichtung aufweisen muss und daher eine separate Umschaltvorrichtung für den Motor erforderlich ist.

Eine Umschaltvorrichtung für eine Lenkungsverriegelung ist beispielsweise in der DE 199 45 867 C2 beschrieben, die zwei getrennte Versorgungspfade, nämlich einen Entriegelungs-Versorgungspfad, der den Stellmitteln die zum Verbringen, d.h. zum Umsteuern bzw. Umschalten, in ihre Entriegelungsstellung benötigte elektrische Energie bereitstellt, und einen Verriegelungs-Versorgungspfad, der die zum Verbringen in ihre Verriegelungsstellung benötigte elektrische Energie bereitstellt. Hierbei weist die Lenkungsverriegelungsvorrichtung einen Stellmotor auf, der über zwei parallel angeordnete Relaisspulen in jeweils eine von zwei Drehrichtungen ansteuerbar ist, wobei die eine Motordrehrichtung das Stellelement in den entriegelten Zustand und die andere Drehrichtung das Stellelement in den verriegelten Zustand versetzt. Einer der Nachteile dieser Vorrichtung ist, dass entsprechende Umschaltvorrichtungen zur Drehrichtungsumkehr notwendig sind, welches mit einem hohen Steuerungsaufwand verbunden ist.

In der DE 103 58 009 B3 ist eine Lenkungsverriegelung für Fahrzeuge beschrieben, die aus einen Sperrrad, einem Federelement und einem Antriebsrad besteht. Das Sperrrad und das Antriebsrad sind an einer gemeinsamen Drehachse drehbeweglich gelagert. Das Federelement bildet eine Speicherfeder zwischen Antriebsrad und Sperrrad. An der Lenksäule ist ein Sperrkranz ausgebildet, der regelmäßig voneinander beabstandete Nuten aufweist. Die Nuten bilden Sperröffnungen für das Sperrrad. Das Sperrrad weist umfangseitig radial vorspringende Segmente auf. Dadurch nimmt das Sperrrad pro Umdrehung mehrere Verriegelungsstellungen bzw. Entriegelungsstellungen ein, ohne dass der Motor seine Drehrichtung wechselt. Einer der Nachteile dieser Vorrichtung ist, dass insbesondere aufgrund des Sperrrades ein großes Bauvolumen benötigt wird.

Die EP 1 249 375 A2 offenbart eine Vorrichtung zur Verriegelung einer Lenksäule in einem Fahrzeug mit den Merkmalen des Oberbegriffs des Anspruchs 1, die zu einer Ver- und Entriegelung der Lenksäule einen nur in eine Richtung drehenden Motor benötigt. Hierbei wird die Entrlegelung durch Druckfedern herbeigeführt, die einen Schlitten eines Verriegelungselementes in eine Entsicherungslage bewegen, nachdem ein Exzenter mit einer Radialstufe sich so gedreht hat, dass eine derartige Bewegung ermöglicht wird.

Auch in der DE 100 17 032 A1 ist ein dem Exzenter der EP 1 249 375 A2 ähnlicher Nocken vorgesehen. Wie In der EP 1 249 375 A2 wird eine Entriegelungsposition eines Sperrbolzens dadurch erreicht, dass, wenn der Nocken eine stell abfallende Fläche zum Sperrbolzen dreht, der Sperrbolzen durch die Kraft einer Rückholfeder in die Entriegelungsposition bewegt wird. Es Ist Aufgabe der vorliegenden Erfindung, eine Vorrichtung zur Ansteuerung eines Sperrgliedes zu schaffen, bei der die genannten Nachteile vermieden werden, insbesondere eine Vorrichtung bereit gestellt wird, die einfach und kompakt gestaltet ist, ohne erheblichen Aufwand montiert werden kann und eine sichere Funktionsweise aufweist.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Getriebe eine umlaufende, kurvenartige Führung aufweist, In der mindestens ein Steuernocken eingreift, und bei einer Drehung des Antriebsrades der Steuernocken die Führung durchläuft, wodurch das Sperrglied linear bewegt wird.

Das Getriebe wird beispielsweise durch einen Drehmotor angetrieben, der das Antriebsrad um die Drehachse bewegt. Gleichzeitig durchläuft der Steuernocken die Führung, welches mit einer Längsverschiebung des Sperrgliedes verbunden ist. In einer möglichen Ausführungsform der Erfindung kann aufgrund der Drehung des Antriebsrades gleichzeitig die Führung sich mitbewegen, In der der Steuernocken linear mitbewegt wird. Alternativ dazu kann ebenfalls vorgesehen sein, dass mit der Drehung des Antriebsrades der Steuernocken ebenfalls sich um die Drehachse mitbewegt, wodurch die Führung linear verschoben wird. Einer der wesentlichen Vorteile dieser erfindungsgemäßen Vorrichtung ist, dass ein kompakter Aufbau erzielt wird, wobei gleichzeitig die Konstruktion wenige Einzelteile aufweist und somit die Herstellung und Montage mit einem geringen Aufwand möglich Ist. Besonders vorteilhaft ist, dass sowohl für den Entriegelungsvorgang als auch Verriegelungsvorgang die Drehung des Antriebsrades ausschließlich in eine Richtung erfolgen kann, wodurch der Aufwand für die Steuerung der Vorrichtung erheblich reduziert werden kann. Vorteilhafterweise weist die Führung einen ersten Bereich und einen zweiten Bereich auf, wobei der erste Bereich und der zweite Bereich entlang ihres Verlaufes einen sich verändernden Abstand zur Drehachse aufweisen. Der sich verändernde Abstand des ersten und des zweiten Bereiches bewirkt, dass während der Drehung des Antriebsrades eine Linearverschiebung des Sperrgliedes erfolgen kann.

Zweckmäßigerweise ist das Getriebe durch ein Gehäuse umfasst, wobei das Gehäuse eine Öffnung aufweist, durch die das Sperrglied zumindest in seiner Verriegelungsstellung hindurchragt. Vorzugsweise ist das Sperrglied mit einem freien Ende ausgebildet, das in der Verriegelungsstellung in das funktionswesentliche Bauteil eingreift. In einem Entriegelungsvorgang, bei dem sich das Sperrglied von seiner Verriegelungsstellung in seine Entriegelungsstellung bewegt, bewegt sich das freie Ende des Sperrgliedes in Richtung der Öffnung des Gehäuses, wobei vorteilhafterweise in der Entriegelungsstellung das freie Ende vollständig innerhalb des Gehäuses sich befindet.

Damit es in einem Verriegelungsvorgang, bei dem das Sperrglied aus der Entriegelungsstellung in die Verriegelungsstellung geführt wird, nicht zu etwaigen Beschädigungen des Sperrgliedes oder des funktionswesentlichen Bauteils kommt, ist am Sperrglied ein Zusatzglied angeordnet, das über ein Federelement mit dem Sperrglied in Wirkverbindung steht. Das funktionswesentliche Bauteil weist Bereiche, beispielsweise Nuten auf, in die in Verriegelungsstellung das Sperrglied sich erstreckt. Falls während des Verriegelungsvorganges das Sperrglied mit seinem freien Ende aufgrund einer etwaigen Fehlstellung des funktionswesentlichen Bauteiles nicht in die Nut eingreifen kann, kann durch das Federelement, das zwischen dem Sperrglied und dem Zusatzglied sich befindet, eine etwaige Funktionsstörung der erfindungsgemäßen Vorrichtung verhindert werden. Eine lediglich geringe Bewegung des funktionswesentlichen Bauteiles bewirkt, dass das Sperrglied durch das Federelement in die Nut gedrückt wird und somit in das funktionswesentliche Bauteil einrastet und die Verriegelungsstellung einnimmt.

In einer weiteren die Erfindung verbessernden Maßnahme ist die Führung mit einem dritten Bereich und einem vierten Bereich ausgeführt, die jeweils einen konstanten Abstand zur Drehachse aufweisen, wodurch bei einer Drehung des Antriebsrades der Steuernocken den dritten oder den vierten Bereich durchfährt, ohne dass sich das Sperrglied bewegt. Vorteilhafterweise weist der dritte Bereich einen Abstand zur Drehachse auf, der geringer ist als der Abstand des vierten Bereiches zur Drehachse. Erfindungsgemäß wird durch die genannten Bereiche eine geschlossene Kurve der Führung erzielt, wobei der erste Bereich vom zweiten Bereich durch den dritten und den vierten Bereich derart getrennt ist, dass während einer vollständigen 360° Drehung des Antriebsrades der Steuernocken ausgehend vom ersten Bereich in den dritten Bereich, anschließend in den zweiten Bereich und daraufhin in den vierten Bereich gelangt. Durch die Ausführung der Führung mit unterschiedlichen Bereichen wird zusätzlich erzielt, dass das Sperrglied nur bei speziellen Drehpositionen des Antriebsrades eine Hubbewegung vollzieht. Somit kann vorteilhafterweise der Motor für das Getriebe einen entsprechenden Nachlauf oder Anlauf aufweisen, ohne ungewollt das Sperrglied dabei zu betätigen.

In einer bevorzugten Ausführungsform der Erfindung ist das Antriebsrad mit der Führung ausgeführt, in die der Steuernocken eingreift, der am Sperrglied angeordnet ist. Vorteilhafterweise ist das Antriebsrad in einer kreisförmigen Ausnehmung des Gehäuses drehbar gelagert. Ferner kann das Gehäuse eine zur Führung einseitig offene Aufnahme aufweisen, in der das Sperrglied linear bewegbar gelagert ist. Während das Antriebsrad sich um die Drehachse bewegt, bewegt sich die Führung mit dem Antriebsrad und wirkt auf den Steuernocken, der entlang der Führung fährt. Da das Antriebsrad um die Drehachse ortsfest am Gehäuse angeordnet ist, drückt die Führung aufgrund ihrer Kontur den Steuernocken linear hin und her in die Verriegelungsstellung oder in die Entriegelungsstellung des Sperrgliedes.

Bevorzugt sind zwei Steuernocken vorgesehen, die 180° versetzt zueinander in die Führung eingreifen. Hierdurch wird eine erhöhte Funktionssicherheit des Getriebes gewährleistet, falls etwaig ein Steuernocken abbrechen sollte. In einer möglichen Ausführungsform der Erfindung ist das Gehäuse sowie das Antriebsrad mit der kurvenartigen Führung aus einem Kunststoff hergestellt. Das Sperrglied ist ebenfalls aus einem Kunststoffmaterial. Um eine erhöhte Sicherheit zu erzielen, kann der Steuernocken aus einem metallischen Material bestehen. Ferner kann das freie Ende des Sperrgliedes in seiner Kontur abgerundet ausgeführt sein, wodurch ein Einrasten des Sperrgliedes in die Nut des funktionswesentlichen Bauteils erleichtert wird.

Die erfindungsgemäße Vorrichtung kann als elektrische Lenkungsverriegelung für Fahrzeuge zum Einsatz kommen, wobei die Vorrichtung zudem problemlos mit insbesondere sogenannten "Keyless-Entry"-Systemen kombinierbar ist. Die erfindungsgemäße Vorrichtung kann von außen, beispielsweise per Funksignal oder nach einem stattgefundenen Datenaustausch aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder den Gangschalthebel des Kraftfahrzeuges blockiert oder nicht. Dies kann zum Beispiel durch eine optische oder akustische Meldevorrichtung dargestellt werden.

Vorteilhafterweise wird die Vorrichtung zur Ansteuerung des Sperrgliedes durch eine Steuerelektronik überwacht, die fahrzeugseitig angeordnet sein kann. Aus sicherheitstechnischen Gründen ist es vorteilhaft, wenn neben der Fassung des Drehweges des Antriebsrades auch bestimmte Positionen des Sperrgliedes erfasst werden. Dieses kann beispielsweise durch Sensoren, insbesondere Magnetfeldsensoren, erfolgen, die das magnetische Feld eines auf dem Antriebsrad oder Sperrglied angebrachten Permanentmagneten erfassen. Dadurch kann eine elektronische Steuerung die Funktionsfähigkeit der mechanischen Kopplung zwischen dem Antriebsrad und des Sperrgliedes überwachen, sowie eine Manipulation erkennen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine erfindungsgemäße Vorrichtung zur Ansteuerung eines Sperrgliedes einer Lenksäule, wobei das Sperrglied in Verriegelungsstellung sich befindet,
- Fig. 2: ein Antriebsrad für ein Sperrglied gemäß Fig. 1 in einer ersten Drehlage,
- Fig. 3: das Antriebsrad in einer zweiten Drehlage,
- Fig. 4: das Antriebsrad in einer dritten Drehlage und
- Fig. 5: das Antriebsrad in einer vierten Drehlage.

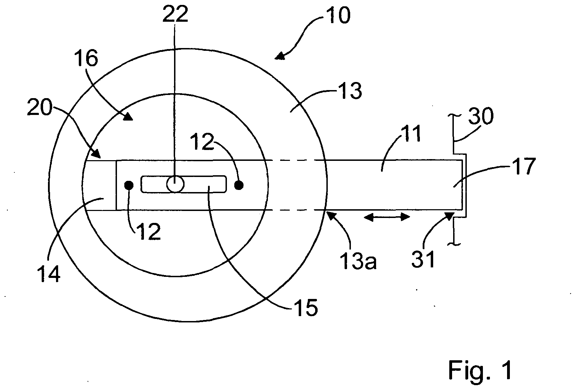

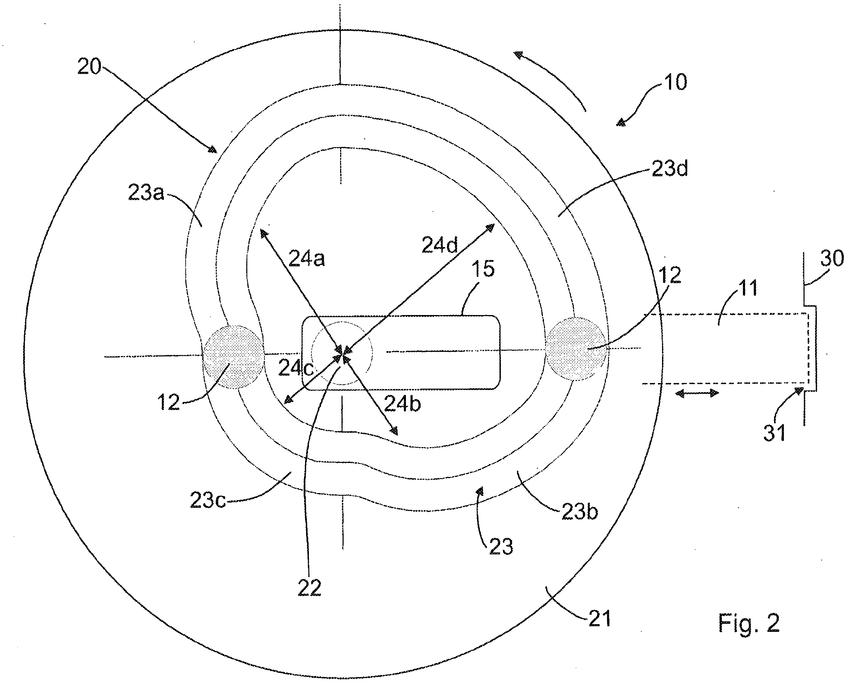

In Fig. 1 ist ein Sperrglied 11 dargestellt, der in einem Gehäuse 13 geführt ist. Das Sperrglied 11 ist in einer Verriegelungsstellung, bei der es in eine Nut 31 eines funktionswesentlichen Bauteils, hier einer Lenksäule 30 eingreift. Das Gehäuse 13 weist hierbei eine einseitig offene Aufnahme 14 auf, in der das Sperrglied 11 linear nach links und rechts bewegbar gelagert ist. Das Gehäuse 13 ist des Weiteren mit einer kreisförmigen Ausnehmung 16 ausgeführt, in der ein Antriebsrad 21 gemäß Fig. 2 einsetzbar ist. Die Kontur der Ausnehmung 16 ist entsprechend der kreisförmigen Kontur des Antriebsrades 21 angepasst. Das Antriebsrad 21 weist an einer Seite, die im eingesetzten Zustand der offenen Aufnahme 14 zugewandt ist, eine umlaufende, kurvenartige Führung 23 auf. Das Sperrglied 11 hingegen ist mit zwei Steuernocken 12 ausgeführt, die im eingesetzten Zustand des Antriebsrades 21 in die Führung 23 eingreifen. Zwischen beiden Steuernocken 12 ist ein Langloch 15 angeordnet, durch den die Drehachse 22 verläuft.

Befindet sich das Antriebsrad 21 innerhalb der Ausnehmung 16 des Gehäuses 13, bildet die Führung 23 mit dem Antriebsrad 21 sowie den Steuernocken 12 ein Getriebe 20, welches das Sperrglied 11 in eine Verriegelungsstellung und in eine Entriegelungsstellung bewegen kann, welches im einzelnen in den Fig. 2 bis Fig. 5 beschrieben ist.

Wie aus Fig. 2 deutlich zu erkennen ist, ist die Führung 23 mit einem ersten Bereich 23a und einem zweiten Bereich 23b ausgeführt. Ausgehend von einer Drehrichtung gegen den Uhrzeigersinn um die Drehachse 22 nimmt der Abstand 24a des ersten Bereiches 23a zur Drehachse 22 ab und der Abstand 24b des zweiten Bereiches 23b zur Drehachse 22 hingegen zu. Im vorliegenden Ausführungsbeispiel ist der erste Bereich 23a spiegelsymmetrisch zum zweiten Bereich 23b ausgebildet. Die Führung 23 ist ferner mit einem dritten Bereich 23c und einem vierten Bereich 23d ausgeführt, die jeweils einen konstanten Abstand 24a, 24b, 24c, 24d zur Drehachse 22 aufweisen. Der dritte Bereich 23c und der vierte Bereich 23d sind kreissegmentartig ausgeführt. Hierbei weist der dritte Bereich 23c einen Abstand 24c zur Drehachse 22a auf, der geringer ist als der Abstand 24d des vierten Bereiches 23d zur Drehachse 22. Die Führung 23 wird somit durch den ersten 23a, zweiten 23b, dritten 23c und vierten Bereich 23d gebildet und ergibt eine geschlossene, umlaufende Kurve, wobei der erste Bereich 23a vom zweiten Bereich 23b durch den dritten Bereich 23c und den vierten Bereich 23d derart getrennt ist, dass während einer vollständigen 360° Drehung des Antriebsrades 21 der Steuernocken 12 ausgehend vom ersten Bereich 23a in den dritten Bereich 23c, anschließend in den zweiten Bereich 23b und daraufhin in den vierten Bereich 23d gelangt.

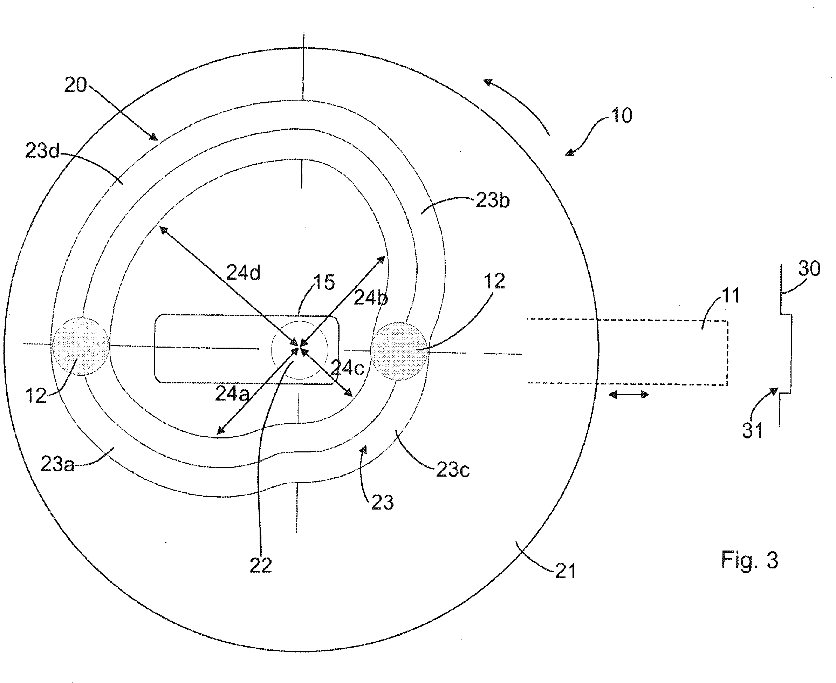

In Fig. 2 befindet sich das Antriebsrad 21 in seiner ersten Position, bei der das Sperrglied 11 sich in seiner Verriegelungsstellung befindet. Während des Entriegelungsvorganges, bei dem das Sperrglied 11 von seiner Verriegelungsstellung in seine Entriegelungsstellung geführt wird, bewegt sich das Antriebsrad 21 um 90° gegen den Uhrzeigersinn um die Drehachse 22, bis es die Position gemäß Fig. 3 erreicht. Da sich während der Drehung des Antriebsrades 21 der Abstand 24a zwischen dem ersten Bereich 23a und der Drehachse 22 für den linken Steuernocken 12 vergrößert und gleichzeitig der Abstand 24b zwischen dem zweiten Bereich 23b und der Drehachse 22 für den rechten Steuernocken 12 verkleinert, wird das Sperrglied 11 nach links linear verschoben, dass bedeutet, von der Verriegelungsstellung in eine Entriegelungsstellung. Gleichzeitig verschiebt sich das Langloch 15 linear nach links und weist eine Position auf, die in Fig. 3 gezeigt ist.

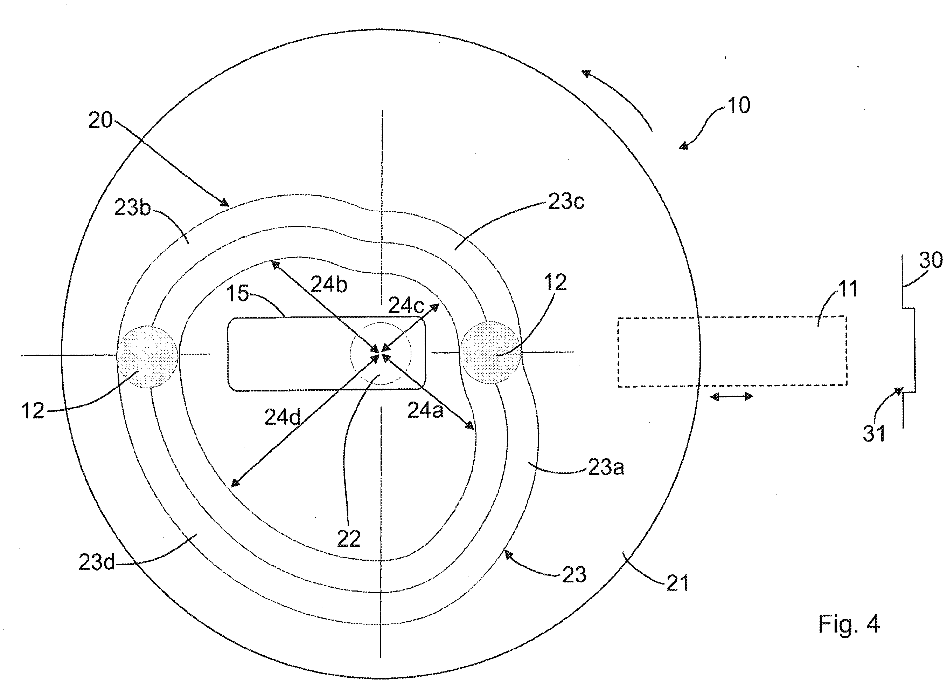

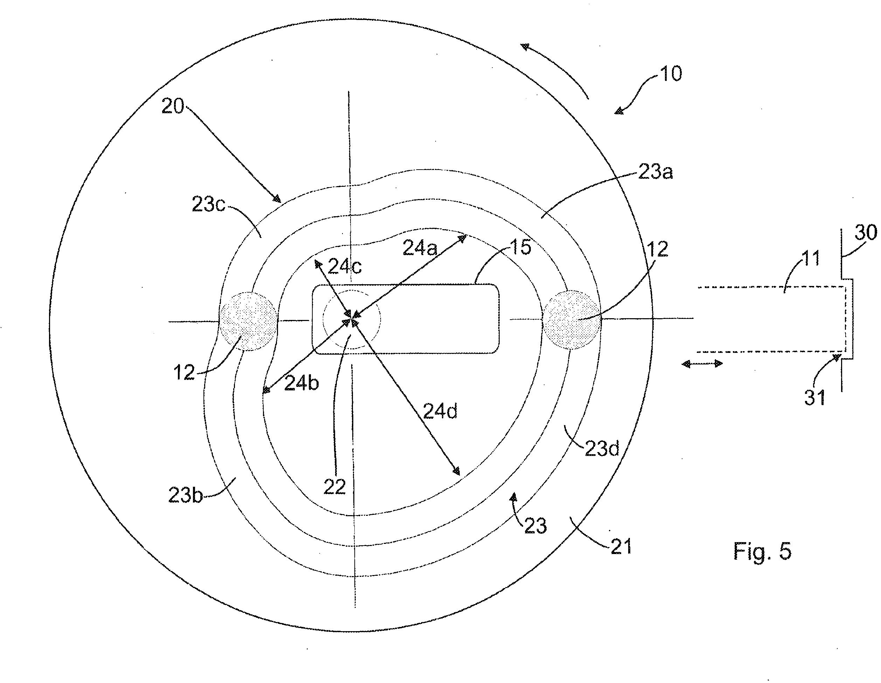

Vorteilhafterweise ist die Vorrichtung 10 mit einem Nachlauf oder Anlauf ausgeführt, dass bedeutet, dass der nicht dargestellte Motor, der das Antriebsrad 21 antreibt, in einem gewissen Winkelbereich des Antriebsrades 21 nachlaufen oder anlaufen kann, ohne das Sperrglied 11 hierdurch zu betätigen. Hierfür dienen der dritte Bereich 23c und der vierte Bereich 23d. Ausgehend von der Position des Antriebsrades 21 gemäß Fig. 3 kann das Antriebsrad 21 gegen den Uhrzeigersinn um die Drehachse 22 weiter bewegt werden, ohne die beiden Steuernocken 12 linear zu bewegen. Während das Antriebsrad 21 gemäß Fig. 3 gegen den Uhrzeigersinn bewegt wird, treten die Steuernocken 12 gleichzeitig in den dritten 23c und den vierten Bereich 23d der Führung 23 ein. Da beide Bereiche 23c, 23d jeweils einen konstanten Abstand 24a, 24b zur Drehachse 22 aufweisen, erfolgt lediglich eine Drehung des Antriebsrades 21 um die Drehachse 22, ohne dass die Führung 23 die beiden Sperrnocken 12 aus der Position gemäß Fig. 3 bewegt. Somit erreicht das Antriebsrad 21 nach einer 90° Drehung um die Drehachse 22 die Position, die in Fig. 4 dargestellt ist. Dieser Schwenkbereich der Antriebsachse 21, der nicht für eine lineare Bewegung des Sperrgliedes 11 sorgt, kann vorteilhafterweise für den Nachlauf oder Anlauf des Motors genutzt werden. Ausgehend von der Fig. 4 kann durch eine weitere Drehung des Antriebsrades 21 gegen den Uhrzeigersinn um die Drehachse 22 das Sperrglied 11 von seiner Entriegelungsstellung in seine Verriegelungsstellung linear bewegt werden. Für diese Bewegung sorgen wiederum der erste Bereich 23a und der zweite Bereich 23b, die entsprechend ihrer Kontur die Steuernocken 12 linear nach rechts bewegen. Während das Antriebsrad 21 sich bewegt, wird der Abstand 24a des ersten Bereiches 23a für den rechten Sperrnocken 12 zur Drehachse 22 größer und gleichzeitig der Abstand 24b des linken Sperrnockens 12 im zweiten Bereich 23b zur Drehachse 22 kleiner. Hierdurch erfolgt eine lineare Verschiebung der Sperrnocken 12 und somit des Sperrgliedes 11 in die Verriegelungsstellung, in der das Sperrglied 11 in die Nut 31 der Lenksäule 30 eingreift. Wie in Fig. 5 zu erkennen ist, hat sich während der Bewegung des Sperrgliedes 11 in die Verriegelungsstellung gleichzeitig das Langloch 15 nach rechts verschoben.

### Bezugszeichenliste

- 10: Vorrichtung
- 11: Sperrglied
- 12: Steuernocken
- 13: Gehäuse
- 13a: Öffnung
- 14: Aufnahme
- 15: Langloch
- 16: Ausnehmung
- 17: freies Ende
- 20: Getriebe
- 21: Antriebsrad
- 22: Drehachse
- 23: Führung
- 23a: erster Bereich der Führung
- 23b: zweiter Bereich der Führung
- 23c: dritter Bereich der Führung
- 23d: vierter Bereich der Führung
- 24a: Abstand
- 24b: Abstand
- 24c: Abstand
- 24d: Abstand
- 30: funktionswesentliches Bauteil, Lenksäule
- 31: Nut

## Patentansprüche

1. Vorrichtung (10) zur Ansteuerung eines Sperrgliedes (11) eines funktionswesentlichen Bauteils (30), insbesondere einer Lenksäule (30) oder eines Gangschalthebels eines Kraftfahrzeuges, mit
einem Getriebe (20), das ein Antriebsrad (21) mit einer ersten, ortsfesten Drehachse (22) aufweist und mit dem Sperrglied (11) in mechanischer Wirkverbindung steht, wodurch bei Drehung des Antriebsrades (21) das Sperrglied (11) in eine Verriegelungsstellung und in eine Entriegelungsstellung bringbar ist, wobei die Bewegung des Sperrgliedes (11) durch eine Drehung des Antriebsrades (21) ausschließlich in eine Richtung durchführbar ist,
**dadurch gekennzeichnet,**
**dass** das Getriebe (20) eine umlaufende, kurvenartige Führung (23) aufweist, in der mindestens ein Steuernocken (12) eingreift, und bei einer Drehung des Antriebsrades (21) der Steuernocken (12) die Führung (23) durchläuft, wodurch das Sperrglied (11) linear bewegt wird.

2. Vorrichtung (1) nach Anspruch 1,
**dadurch gekennzeichnet,**
**dass** die Führung (23) einen ersten Bereich (23a) und einen zweiten Bereich (23b) aufweist, wobei der erste Bereich (23a) und der zweite Bereich (23b) entlang ihres Verlaufes einen sich verändernden Abstand (24a,24b) zur Drehachse (22) aufweisen.

3. Vorrichtung (1) nach Anspruch 1 oder 2,
**dadurch gekennzeichnet,**
**dass** das Getriebe (20) durch ein Gehäuse (13) umfasst ist, wobei das Gehäuse (13) eine Öffnung (13a) aufweist, durch die das Sperrglied (11) zumindest in seiner Verriegelungsstellung hindurchragt.

4. Vorrichtung (1) nach einem der vorhergehenden Ansprüche,
**dadurch gekennzeichnet,**
**dass** ausgehend von einer Drehrichtung um die Drehachse (22) der Abstand (24a) des ersten Bereiches (23a) entlang seines Verlaufes zur Drehachse (22) abnimmt und der Abstand (24b) des zweiten Bereiches (23b) entlang seines Verlaufes zur Drehachse (22) zunimmt.

5. Vorrichtung (1) nach einem der vorhergehenden Ansprüche,
**dadurch gekennzeichnet,**
**dass** der erste Bereich (23a) spiegelsymmetrisch zum zweiten Bereich (23b) ausgebildet ist.

6. Vorrichtung (1) nach einem der vorhergehenden Ansprüche,
**dadurch gekennzeichnet,**
**dass** die Führung (23) mit einem dritten Bereich (23c) und einem vierten Bereich (23d) ausgeführt ist, die jeweils einen konstanten Abstand (24c,24d) zur Drehachse (22) aufweisen, wodurch bei einer Drehung des Antriebsrades (21) der Steuernocken (12) den dritten oder den vierten Bereich (23c,23d) durchfährt, ohne dass sich das Sperrglied (11) bewegt.

7. Vorrichtung (1) nach Anspruch 6,
**dadurch gekennzeichnet,**
**dass** der dritte Bereich (23c) einen Abstand (24c) zur Drehachse (22) aufweist, der geringer ist als der Abstand (24d) des vierten Bereiches (23d) zur Drehachse (22).

8. Vorrichtung (1) nach einem der vorhergehenden Ansprüche,
**dadurch gekennzeichnet,**
**dass** die Bereiche (23a,23b,23c,23d) eine geschlossene Kurve ergeben, wobei der erste Bereich (23a) vom zweiten Bereich (23b) durch den dritten (23c) und den vierten Bereich (23d) derart getrennt ist, dass während einer vollständigen 360° Drehung des Antriebsrades (21) der Steuernocken (12) ausgehend vom ersten Bereich (23a) in den dritten Bereich (23c), anschließend in den zweiten Bereich (23b) und daraufhin in den vierten Bereich (23d) gelangt.

9. Vorrichtung (1) nach einem der vorhergehenden Ansprüche,
**dadurch gekennzeichnet,**
**dass** das Antriebsrad (21) mit der Führung (23) ausgeführt ist, in die der Steuernocken (12) eingreift, der am Sperrglied (11) angeordnet ist.

10. Vorrichtung (1) nach einem der vorhergehenden Ansprüche,
**dadurch gekennzeichnet,**
**dass** das Gehäuse (13) eine zur Führung (23) einseitig offene Aufnahme (14) aufweist, in der das Sperrglied (11) linear bewegbar gelagert ist.

11. Vorrichtung (1) nach einem der vorhergehenden Ansprüche,
**dadurch gekennzeichnet,**
**dass** das Sperrglied (11) ein Langloch (15) aufweist, durch die die Drehachse (22) verläuft.

12. Vorrichtung (1) nach einem der vorhergehenden Ansprüche,
**dadurch gekennzeichnet,**
**dass** das Antriebsrad (21) in einer kreisförmigen Ausnehmung (16) des Gehäuses (13) gelagert ist.

13. Vorrichtung (1) nach einem der vorhergehenden Ansprüche,
**dadurch gekennzeichnet,**
**dass** zwei Steuernocken (12) vorgesehen sind, die 180° versetzt zueinander in die Führung (23) eingreifen, wobei insbesondere bei Drehung des Antriebrades (21), das ortsfest sich um die Drehachse (22) dreht, die Führung (23) auf die Steuernocken (12) wirkt, wodurch sich das Sperrglied (11) entlang der Aufnahme (14) bewegt.

14. Vorrichtung (1) nach einem der vorhergehenden Ansprüche,
**dadurch gekennzeichnet,**
**dass** das Sperrglied (11) ein freies Ende (17) aufweist, das in der Verriegelungsstellung in das funktionswesentliche Bauteil (30) eingreift.

15. Vorrichtung (1) nach einem der vorhergehenden Ansprüche,
**dadurch gekennzeichnet,**
**dass** am Sperrglied (11) ein Zusatzglied angeordnet ist, das über ein Federelement mit dem Sperrglied (11) verbunden ist.

## Claims

1. Device (10) for actuating a lock element (11) of an operation essential construction component (30), particularly a steering column (30) or a shift lever of a vehicle, with a gear (20) comprising a gear drive (21) with a first, stationary axis of rotation (22) and a lock element (11) In operative connection, whereas during a rotation of the gear dive (21) the lock element (11) is shiftable in a locking position and In an unlocking position,
whereas the movement of the lock element (11) is exclusively operatable in one direction through the rotation of the gear drive (21), **characterized in that**,
the gear (20) comprises a revolving, cam-like guiding rail (23), in which at least a cam (12) is engaging and during the rotation of the gear drive (21) the cam (12) is traversing the guiding rail (23), whereas the locking element (11) is linear effected.

2. Device (10) according to claim 1,
**characterized In that**,
that the guiding rail (23) comprises a first area (23a) and a second area (23b), whereas the first area (23a) and the second area (23b) comprise a varying separation distance (24a, 24b) to the axis of rotation (22) alongside their distribution.

3. Device (10) according to claim 1 or 2,
**characterized in that**,
the gear (20) is enclosed by a housing (13), whereas the housing (13) comprises an opening (13a), through which the lock element (11) is protruding at least in the locking position.

4. Device (10) according to one of the preceding claims,
**characterized in that**,
based on the direction of rotation around the axis of rotation (22) the distance (24a) of the first area (23a) Is decreasing alongside its distribution to the axis of rotation (22) and the distance (24b) of the second area (23b) is Increasing alongside its distribution to the axis of rotation (22).

5. Device (10) according to one of the preceding claims,
**characterized In that**,
the first area (23a) is mirror-symmetrically shaped according to the second area (23b).

6. Device (10) according to one of the preceding claims,
**characterized In that**,
the guiding rail (23) comprises a third area (23c) and a fourth area (23d), which each comprise a constant distance (24c, 24d) to the axis of rotation (22), whereas during the rotation of the gear drive (21) the cam (12) is traversing the third and the fourth area (23c, 23d), without movement of the lock element (11).

7. Device (10) according to claim 6,
**characterized In that**,
the third area (23c) comprises a distance (24c) to the axis of rotation (22), which is less the distance (24d) of the fourth area (23d) to the axis of rotation (22).

8. Device (10) according to one of the preceding claims,
**characterized In that**,
the areas (23a, 23b, 23c, 23d) result in an enclosed curve, whereas the first area (23a) is separated from the second area (23b) by the third (23c) and fourth area (23d) in a way that during a complete 360° rotation of the gear drive (21) the cam (12) is traversing, starting from the first area (23a) into the third area (23c), afterwards into the second area (23b) and in the fourth area (23d).

9. Device (10) according to one of the preceding claims,
**characterized in that**,
the gear drive (21) comprises a guiding rail (23) in which the cam (12), assembled at the lock element (11), is engaging.

10. Device (10) according to one of the preceding claims,
**characterized in that**,
the housing (13) comprises an unidirectional open acceptance (14) in the direction of the guiding rail (23) in which the lock element (11) is linear moveably mounted.

11. Device (10) according to one of the preceding claims,
**characterized in that**,
the lock element (11) comprises a long hole (15) through which the axis of rotation (22) Is traversing.

12. Device (10) according to one of the preceding claims,
**characterized in that**,
the gear drive (21) is mounted In a circular recess (16) of the housing (13).

13. Device (10) according to one of the preceding claims,
**characterized in that**,
two cams (12) are intended engaging into the guiding rail (23) displaced by 180° to each other, whereas the guiding rail (23) affects the cam (12), particularly during a rotation of the gear drive (21) which is stationary rotating about an axis of rotation (22), whereas the lock element (11) is moving along the acceptance (14).

14. Device (10) according to one of the preceding claims,
**characterized In that**,
the lock element (11) comprises an idle edge (17), which is engaging with the operation essential construction component (30) in the locking position.

15. Device (10) according to one of the preceding claims,
**characterized in that**,
the lock element (11) comprises a supplementary device, which is connected to the lock element (11) via a spring element.

## Revendications

1. Dispositif (10) de commande d'un organe de verrouillage (11) d'un composant (30) essentiel au fonctionnement, en particulier d'une colonne de direction (30) ou d'un levier de changement de vitesses d'un véhicule automobile, avec un engrenage (20), qui présente une roue d'entraînement (21) dotée d'un premier axe de rotation (22) disposé en un emplacement fixe et qui se trouve en liaison fonctionnelle mécanique avec l'organe de verrouillage (11), de sorte que l'organe de verrouillage (11) peut, lors de la rotation de la roue d'entraînement (21), être amené dans une position de verrouillage et dans une position de déverrouillage,
sachant que le mouvement de l'organe de verrouillage (11) peut être réalisé par une rotation de la roue d'entraînement (21) exclusivement dans un sens,
**caractérisé en ce que** l'engrenage (20) présente un guidage périphérique (23) du type piste de came, dans lequel s'engage au moins une came de commande (12), et la came de commande (12) parcourt le guidage (23) lors d'une rotation de la roue d'entraînement (21), de sorte que l'organe de verrouillage (11) est déplacé de manière linéaire.

2. Dispositif (10) selon la revendication 1, **caractérisé en ce que** le guidage (23) présente une première région (23a) et une deuxième région (23b), sachant que la première région (23a) et la deuxième région (23b) présentent, le long de leur étendue, une distance (24a, 24b) qui se modifie par rapport à l'axe de rotation (22).

3. Dispositif (10) selon la revendication 1 ou 2, **caractérisé en ce que** l'engrenage (20) est entouré par un boîtier (13), sachant que le boîtier (13) présente une ouverture (13a) par laquelle dépasse l'organe de verrouillage (11) au moins dans sa position de verrouillage.

4. Dispositif (10) selon l'une des revendications précédentes, **caractérisé en ce que**, en partant d'un sens de rotation autour de l'axe de rotation (22), la distance (24a) de la première région (23a) par rapport à l'axe de rotation (22) diminue le long de son étendue, et la distance (24b) de la deuxième région (23b) par rapport à l'axe de rotation (22) augmente le long de son étendue,

5. Dispositif (10) selon l'une des revendications précédentes, **caractérisé en ce que** la première région (23a) est réalisée inversement symétrique à la deuxième région (23b).

6. Dispositif (10) selon l'une des revendications précédentes, **caractérisé en ce que** le guidage (23) est réalisé avec une troisième région (23c) et une quatrième région (23d) qui présentent respectivement une distance constante (24c, 24d) par rapport à l'axe de rotation (22), de sorte que, lors d'une rotation de la roue d'entraînement (21), la came de commande (12) parcourt la troisième ou la quatrième région (23c, 23d) sans que l'organe de verrouillage (11) se déplace.

7. Dispositif (10) selon la revendication 6, **caractérisé en ce que** la troisième région (23c) présente une distance (24c) par rapport à l'axe de rotation (22) qui est inférieure à la distance (24d) de la quatrième région (23d) par rapport à l'axe de rotation (22).

8. Dispositif (10) selon l'une des revendications précédentes, **caractérisé en ce que** les régions (23a, 23b, 23c, 23d) forment une piste de came fermée, sachant que la première région (23a) est séparée de la deuxième région (23b) par la troisième région (23c) et la quatrième région (23d) de telle sorte que, pendant une rotation complète à 360° de la roue d'entraînement (21), la came de commande (12), en partant de la première région (23a), parvient dans la troisième région (23c), puis dans la deuxième région (23b) et ensuite dans la quatrième région (23d).

9. Dispositif (10) selon l'une des revendications précédentes, **caractérisé en ce que** la roue d'entraînement (21) est réalisée pourvue du guidage (23), dans lequel s'engage la came de commande (12) qui est disposée sur l'organe de verrouillage (11).

10. Dispositif (10) selon l'une des revendications précédentes, **caractérisé en ce que** le boîtier (13) présente un logement (14) ouvert d'un côté en direction du guidage (23), logement dans lequel l'organe de verrouillage (11) est reçu à déplacement linéaire.

11. Dispositif (10) selon l'une des revendications précédentes, **caractérisé en ce que** l'organe de verrouillage (11) présente un trou oblong (15) par lequel passe l'axe de rotation (22).

12. Dispositif (10) selon l'une des revendications précédentes, **caractérisé en ce que** la roue d'entraînement (21) est montée dans un évidement circulaire (16) du boîtier (13).

13. Dispositif (10) selon l'une des revendications précédentes, **caractérisé en ce qu'**il est prévu deux cames de commande (12) qui s'engagent dans le guidage (23) en étant décalées de 180° l'une par rapport à l'autre, sachant que le guidage (23) agit sur la came de commande (12) en particulier lors de la rotation de la roue d'entraînement (21) qui tourne en un emplacement fixe autour de l'axe de rotation (22), de sorte que l'organe de verrouillage (11) se déplace le long du logement (14).

14. Dispositif (10) selon l'une des revendications précédentes, **caractérisé en ce que** l'organe de verrouillage (11) présente une extrémité libre (17) qui s'engage, dans la position de verrouillage, dans le composant (30) essentiel au fonctionnement.

15. Dispositif (10) selon l'une des revendications précédentes, **caractérisé en ce qu'**un organe supplémentaire, qui est relié à l'organe de verrouillage (11) au moyen d'un élément à effet de ressort, est disposé sur l'organe de verrouillage (11).
